# EUROPÄISCHE PATENTANMELDUNG

(11) **EP 1 683 991 A2**
(43) Veröffentlichungstag der Anmeldung: **26.07.2006**
(21) Anmeldenummer: 06100455.2
(22) Anmeldetag: 17.01.2006
(51) Int. Cl.: F16H 59/50

(54) **Getriebesteuerung für ein Getriebe eines Antriebsstrangs eines Arbeitsfahrzeugs**

(30) Priorität: 24.01.2005 DE 102005000006
(71) Anmelder: Deere & Company, Moline IL 61265-8098 (US)
(72) Erfinder: Reinards, Marco, 54608, Bleialf (DE); Tarasinski, Dr., Nicolai, 67227, Frankenthal (DE); Hirschpek, Ralf, 68239, Mannheim (DE)
(74) Vertreter: Holst, Sönke

(57) **Zusammenfassung**

Die Erfindung bezieht sich auf eine Getriebesteuerung für ein Getriebe eines Antriebsstrangs eines Arbeitsfahrzeugs (10), wobei die Getriebesteuerung mit einer elektronischen Steuereinheit (50) ausgestattet ist, die mit einer Signalquelle zur Bereitstellung von Informationen hinsichtlich des Betriebszustands des Antriebsmotors (36) und mit einer Strategieeingabeeinrichtung (32) zur Auswahl zwischen mindestens einer ersten Schaltstrategie, die einer energiesparenden Fahrweise entspricht, und einer zweiten Schaltstrategie, die einem Hochlastbetrieb entspricht, signalübertragend verbunden und zur Ansteuerung des Aktors (52, 60) zur Auswahl der Übersetzungsstufe basierend auf den erhaltenen Signalen eingerichtet ist.

Es wird vorgeschlagen, dass die Steuereinheit (50) betreibbar ist, bei einer ausgewählten ersten Schaltstrategie mit dem Aktor (52, 60) nur eine vorbestimmte erste Teilmenge der möglichen Übersetzungsstufen des Getriebes (40, 46) und bei einer ausgewählten zweiten Schaltstrategie mit dem Aktor (52, 60) eine vorbestimmte zweite Menge der möglichen Übersetzungsstufen des Getriebes (40, 46) auszuwählen, die größer als die erste Teilmenge ist.

## Beschreibung

Die Erfindung betrifft eine Getriebesteuerung für ein Getriebe eines Antriebsstrangs eines Arbeitsfahrzeugs, wobei der Antriebsstrang einen Antriebsmotor und ein Getriebe enthält, dessen Übersetzungsstufe durch einen Aktor auswählbar ist und die Getriebesteuerung mit einer elektronischen Steuereinheit ausgestattet ist, die mit einer Signalquelle zur Bereitstellung von Informationen hinsichtlich des Betriebszustands des Antriebsmotors und mit einer Strategieeingabeeinrichtung zur Auswahl zwischen mindestens einer ersten Schaltstrategie, die einer energiesparenden Fahrweise entspricht, und einer zweiten Schaltstrategie, die einem Hochlastbetrieb entspricht, signalübertragend verbunden und zur Ansteuerung des Aktors basierend auf den erhaltenen Signalen eingerichtet ist sowie ein Verfahren zum Betrieb der Getriebesteuerung.

Es sind Ackerschlepper bekannt (EP 0 911 553 A), deren Antriebsstrang einen Verbrennungsmotor, ein Gangschaltgetriebe, eine Reversiereinheit, eine Fahrkupplung, ein Kriechganggetriebe (optional), ein Gruppenschaltgetriebe, ein Hinterachsdifferenzial und die angetriebenen Hinterräder umfasst. Das Gangschaltgetriebe ist als Lastschaltgetriebe, auch Teillastschaltgetriebe genannt, ausgebildet, welches Planetenradsätze mit Kupplungen und Bremsen enthält, die eine Umschaltung der Gänge unter Last ermöglichen. Zur Einstellung der Gänge werden durch einen Gangschalthebel Steuersignale an eine Steuereinheit zur Einstellung eines Aktors abgegeben, der auf das Lastschaltgetriebe einwirkt und die Umschaltprozesse steuert. Bei dem Gruppenschaltgetriebe handelt es sich um ein vollsynchronisiertes Schaltgetriebe, dessen Gruppen durch einen Gruppenschalthebel einstellbar sind. Für die Umschaltung der Reversiereinheit zwischen Vorwärts und Rückwärts dient ein Fahrtrichtungshebel. Der beschriebene Antriebsstrang weist eine feine, praxisgerechte Gangabstufung auf und bietet die Möglichkeit, innerhalb einer gewählten Gruppe eine Umschaltung der Gänge unter Last vorzunehmen. In der EP 0 911 553 A wird vorgeschlagen, den Gang des Lastschaltgetriebes während eines Gangwechsels des Synchronschaltgetriebes automatisch anzupassen. Dabei wird ein Gang des Lastschaltgetriebes ausgewählt und automatisch eingestellt, bei dem die Drehzahlen beidseits der Fahrkupplung möglichst wenig differieren. Dadurch muss der Bediener nur noch das Gruppenschaltgetriebe manuell bedienen. Es ist aber noch eine Bedienereinwirkung erforderlich, um die jeweils geeignete Übersetzung auszuwählen.

In der US 4 576 065 A wird ein automatisches Getriebe für ein Fahrzeug beschrieben, dessen Übersetzungsstufe selbsttätig durch eine Steuereinheit in Abhängigkeit von der Position des Gaspedals, der Motordrehzahl und der Fahrzeuggeschwindigkeit ausgewählt wird. Es sind Mittel zur Auswahl der Betriebsart vorgesehen, die eine Optimierung des Betriebsstoffverbrauchs oder eine optimale Leistung des Fahrzeugs ermöglichen. Die Gänge werden abhängig von der ausgewählten Betriebsart und dem Betriebszustand des Fahrzeugs selbsttätig ausgewählt. Beim Herunterschalten des Getriebes, insbesondere an Steigungen, wird jeweils überprüft, ob Gänge übersprungen werden können, ohne nach dem Wiedereinkuppeln die zulässige Drehzahl des Antriebsmotors zu überschreiten, um zu verhindern, dass der gesamte Schaltvorgang zu lange dauert, so dass eine unnötige Verzögerung des Fahrzeugs oder gar ein Abwürgen des Motors vermieden wird. Ein Überspringen von Gangstufen ist nur beim Herunterschalten vorgesehen und unabhängig von der gewählten Betriebsart. Der ausgewählte Gang beruht zudem auf einer relativ aufwändigen Berechnung.

Die EP 1 152 172 A beschreibt ein anderes automatisches Getriebe, das beim Hochschalten anhand der Betriebsbedingungen des Antriebsmotors überprüft, ob Gänge übersprungen werden können.

Die EP 1 070 881 A beschreibt ein konvertierbares Getriebesystem für ein Fahrzeug, bei dem ein programmierbarer Controller das Getriebe wahlweise in einer ersten oder einer zweiten Betriebskonfiguration betreibt. Die jeweils ausgewählte Betriebskonfiguration hängt von der Anwendung des Fahrzeugs ab. In der ersten Betriebskonfiguration können mehr oder weniger Gänge aus der vorhandenen Anzahl der Gänge des Getriebes ausgewählt werden als in der zweiten Betriebskonfiguration. Dadurch kann dasselbe Getriebe beispielsweise in einem Sattelfahrzeug mit 18 Gängen und in einem Kipplaster mit 10 Gängen genutzt werden. Falls eine Übersetzungsstufe defekt ist, kann der Controller programmiert werden, sie nicht mehr zu verwenden.

Die der Erfindung zu Grunde liegende Aufgabe wird darin gesehen, eine Getriebesteuerung bereitzustellen, die eine automatische Auswahl von Übersetzungsstufen eines Getriebes ermöglicht, wobei unnötige Wechsel der Übersetzungsstufe vermieden werden.

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Einer Steuereinheit der Getriebesteuerung wird von einer Signalquelle mit Informationen über den Betriebszustand des Antriebsmotors, beispielsweise über die Belastung des Antriebsmotors, seine Drehzahl und/oder die Position einer Drehzahlvorgabeeinrichtung zur Vorgabe der Drehzahl des Antriebsmotors (z. B. Gaspedal oder Handgashebel) beaufschlagt. Außerdem ist die Steuereinheit mit einer Strategieeingabeeinrichtung verbunden, die es einem Bediener ermöglicht, eine gewünschte Schaltstrategie einzugeben. Er kann zumindest zwischen einer ersten Schaltstrategie, bei der eine energiesparende Fahrweise erfolgt und die sich für eine geringe Auslastung des Fahrzeugs eignet, und einer zweiten Schaltstrategie auswählen, bei der eine hohe Antriebsleistung bereitgestellt wird, und die sich für eine hohe Auslastung des Fahrzeugs eignet. Die Steuereinheit steuert einen Aktor an, der die jeweilige Übersetzungsstufe des Getriebes auswählt. Es wird vorgeschlagen, dass die Steuereinheit bei der ersten Schaltstrategie nur eine erste (Teil-) Menge der vorhandenen Übersetzungsstufen des Getriebes auswählt, während die bei der zweiten Schaltstrategie der Steuereinheit zur Verfügung stehende zweite Menge der Übersetzungsstufen größer als die erste Menge ist. Die beiden Mengen sind fest vorbestimmt. Die Steuereinheit vollzieht das manuelle Schaltverhalten eines menschlichen Bedieners nach, da nicht unbedingt alle möglichen Übersetzungsstufen der Reihe nach hinauf und herunter geschaltet werden, sondern, wenn sinnvoll, einige Übersetzungsstufen übersprungen werden. Die Schaltabfolge folgt einer fest vorgegebenen Reihenfolge, die von der ausgewählten Schaltstrategie abhängt. Die Automatikfunktion kann abschaltbar sein und wird vom Bediener aktiviert. Er kann zumindest zwischen der ersten Schaltstrategie und der zweiten Schaltstrategie auswählen, die je nach dem Belastungszustand des Fahrzeugs ausgewählt werden sollten.

Bei geringer Auslastung des Fahrzeugs (erste Schaltstrategie) werden demnach größere Schaltsprünge durch Weglassen möglicher Übersetzungsstufen erreicht als bei hoher Auslastung des Fahrzeugs (zweite Schaltstrategie), wo eine höhere Anzahl an Übersetzungsstufen zur Anwendung kommt. Es werden insbesondere bei der ersten Schaltstrategie nicht alle vorhandenen Übersetzungsstufen durchgeschaltet, was die Produktivität des Arbeitsfahrzeugs erhöht, da beispielsweise beim Beschleunigen die Zielgeschwindigkeit schneller erreicht wird. Der Verschleiß wird durch die Reduzierung der Schaltvorgänge verringert und der Schaltvorgang wird für den Fahrer angenehmer. Durch die selbsttätige Auswahl der Übersetzungsstufe während der Fahrt wird der Fahrer entlastet und der Arbeitskomfort verbessert. Es sind keine aufwändigen Berechnungen erforderlich, um die nächste auszuwählende Übersetzungsstufe zu bestimmen.

Die selbsttätige Schaltung erfolgt vorzugsweise in Abhängigkeit von der Drehzahl des Antriebsmotors, seiner Beschleunigung, der Stellung einer Drehzahleingabevorrichtung (Gaspedal oder Handgas) und der Einspritzmenge. Es ist möglich, die automatische Schaltung in Abhängigkeit von einem dieser Parameter oder in Abhängigkeit von einer beliebigen Kombination dieser Parameter durchzuführen. Die daraus jeweiligen Werte der Parameter, die zum Schalten führen sind fest vorgegeben, d. h. vom Bediener nicht änderbar. Es wäre jedoch denkbar, einige oder alle dieser Parameter für den Bediener einstellbar zu machen.

Die beiden Schaltstrategien unterscheiden sich, wie bereits dargelegt, durch die Schaltabfolge, und zusätzlich durch die Schaltbedingungen. Bei einer ausgewählten ersten Schaltstrategie wird beispielsweise bereits bei niedrigeren Drehzahlen des Antriebsmotors geschaltet als bei der zweiten Schaltstrategie.

Für das Getriebe kommen unterschiedliche Ausführungsformen in Frage. Es kann sich um ein mehrstufiges mechanisches Getriebe mit vorgeschaltetem Drehmomentwandler handeln, wie es insbesondere in Personenkraftwagen verwendet wird (s. EP 0 744 564 A), oder um ein mechanisches Getriebe mit hinreichend vielen Übersetzungsstufen und automatisch geschalteter Kupplung (s. US 4 576 065) oder mit Planetenrädern und Reibungskupplungen. In einer bevorzugten Ausführungsform umfasst das Getriebe ein Lastschaltgetriebe, welches Planetenradsätze mit Kupplungen und Bremsen enthält, die eine Umschaltung der Gänge unter Last ermöglichen, und ein vor-oder nachgeschaltetes Synchronschaltgetriebe. Das Lastschaltgetriebe und das Synchronschaltgetriebe sind mit jeweils einem Aktor zur Auswahl der Übersetzungsstufe ausgestattet. Da beide Aktoren unabhängig voneinander durch die Steuereinheit ansteuerbar sind, ist eine hohe Anzahl an unterschiedlichen Übersetzungsstufen verfügbar, die sich durch Multiplikation der Anzahl der Übersetzungsstufen des Lastschaltgetriebes mit der Anzahl der Übersetzungsstufen des Synchronschaltgetriebes ergibt. In den Antriebsstrang zwischen dem Antriebsmotor und den Rädern (oder Gleisketten) ist weiterhin eine Kupplung eingefügt, die durch einen Kupplungsaktor zwischen einer Schließ- und Öffnungsposition bewegbar ist. Der Kupplungsaktor wird durch die Steuereinheit selbsttätig kontrolliert.

Findet ein derartiges, ein Lastschaltgetriebe und ein Synchronschaltgetriebe umfassendes Getriebe Verwendung, dann wird, falls die erste Schaltstrategie ausgewählt ist, von der Steuereinheit immer nur eine Teilmenge der möglichen Kombinationen von Stellungen der Aktoren des Lastschaltgetriebes und des Synchronschaltgetriebes verwendet. Wird hingegen die zweite Schaltstrategie ausgewählt, wird eine größere Anzahl der möglichen Kombinationen der Stellungen der Aktoren des Lastschaltgetriebes und des Synchronschaltgetriebes verwendet, jedoch nicht unbedingt alle möglichen Kombinationen.

Die Steuereinheit prüft fortlaufend, bzw. in bestimmten Zeitabschnitten, ob ein Wechsel in eine größere Übersetzungsstufe, d. h. ein Hochschalten, sinnvoll ist. Dabei kann abgefragt werden, ob die Drehzahlvorgabeeinrichtung oberhalb eines bestimmten (ersten) Drehzahlvorgabewerts steht und gleichzeitig die Drehzahl des Antriebsmotors oberhalb eines bestimmten (ersten) Antriebsmotordrehzahlwerts liegt, wobei gleichzeitig die Belastung des Antriebsmotors unterhalb eines bestimmten (ersten) Belastungswerts liegt. Es wird also dann geschaltet, wenn die erste Drehzahl gemäß der Bedienervorgabe und auch tatsächlich überschritten wird, und die Belastung des Antriebsmotors größer als der erste Belastungswert ist. Hier hängt vorzugsweise nur der erste Antriebsmotordrehzahlwert von der ausgewählten Schaltstrategie ab. Er ist bei der ersten Schaltstrategie kleiner als bei der zweiten Schaltstrategie.

Analog prüft die Steuereinheit auch fortlaufend oder in bestimmten Zeitabständen, ob ein Wechsel in eine niedrigere Übersetzungsstufe, d. h. ein Herunterschalten, sinnvoll ist. Ein Herunterschalten findet zweckmäßigerweise dann statt, wenn die Belastung des Antriebsmotors zu einem Absinken der Drehzahl unter einen zweiten Antriebsmotordrehzahlwert geführt hat. Es wird dementsprechend geprüft, ob die Drehzahl des Antriebsmotors unter dem zweiten Antriebsmotordrehzahlwert liegt und gleichzeitig die Beschleunigung des Antriebsmotors unterhalb eines zweiten Beschleunigungswerts liegt, um zu vermeiden, dass die Beschleunigung des Motors bei während der Schaltvorgänge geöffneter Kupplung zu unerwünschten Schaltvorgängen führt. Weiterhin sollte heruntergeschaltet werden, wenn der Bediener durch Wegnahme von Gas anzeigt, dass er das Fahrzeug verzögern will. Diese Bedingung kann daran erkannt werden, dass die Drehzahl des Antriebsmotors unter einem bestimmten (dritten) Antriebsmotordrehzahlwert liegt und die Drehzahlvorgabeeinrichtung unterhalb eines vorbestimmten, dritten Drehzahlvorgabewerts steht. Hier hängt vorzugsweise jeweils nur der zweite Antriebsmotordrehzahlwert von der ausgewählten Schaltstrategie ab. Er ist bei der ersten Schaltstrategie kleiner als bei der zweiten Schaltstrategie.

In den Zeichnungen ist ein nachfolgend näher beschriebenes Ausführungsbeispiel der Erfindung dargestellt. Es zeigt:
- Fig. 1: eine seitliche Ansicht eines landwirtschaftlichen Arbeitsfahrzeugs in Form eines Traktors mit einem daran gehängten Arbeitsgerät,
- Fig. 2: eine schematische Darstellung des Antriebsstrangs und der Getriebesteuerung des Arbeitsfahrzeugs,
- Fig. 3: ein Flussdiagramm, nach dem die Getriebesteuerung arbeitet, und
- Fig.4a bis 4d: die für Schaltvorgänge abgefragten Bedingungen.

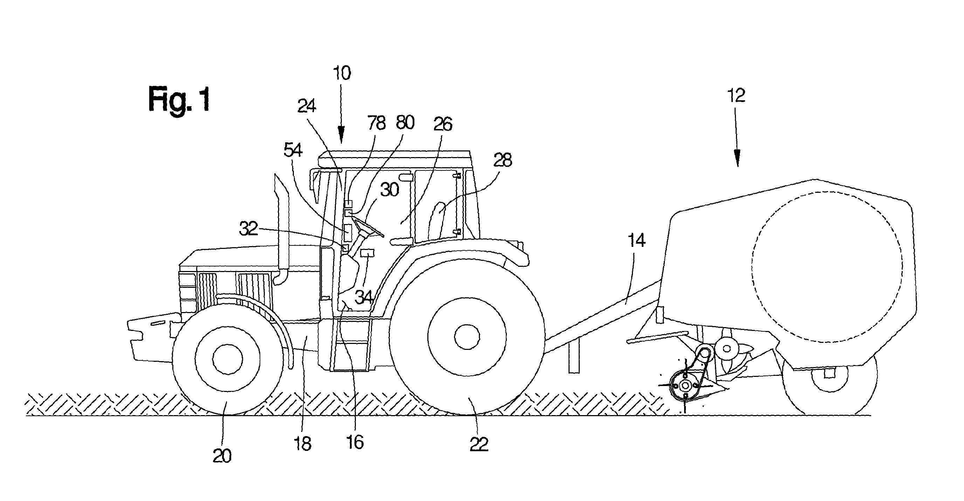

Die Figur 1 zeigt eine seitliche Ansicht eines landwirtschaftlichen Arbeitsfahrzeugs 10 in Form eines Traktors und eines mittels einer Deichsel 14 an eine Kupplung (nicht gezeigt) des Arbeitsfahrzeugs 10 gekoppelten Arbeitsgeräts 12 in Form einer Rundballenpresse. Das Arbeitsfahrzeug 10 baut sich auf einem tragenden Rahmen 18 auf, der sich auf lenkbaren Vorderrädern 20 und antreibbaren Hinterrädern 22 abstützt und eine Kabine 24 trägt, in der sich ein Bedienerarbeitsplatz 26 befindet.

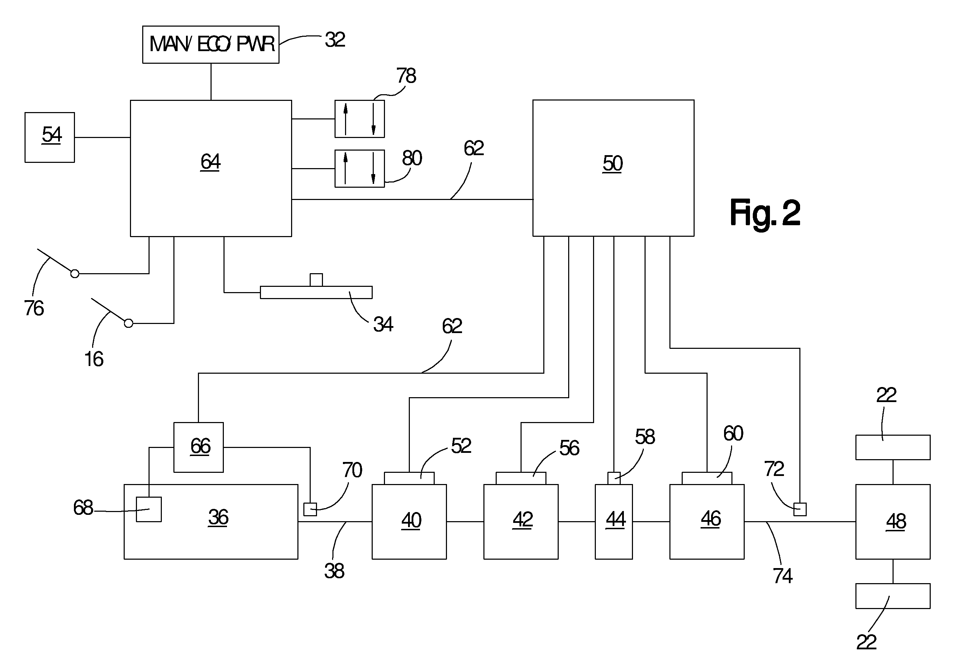

Der Bedienerarbeitsplatz 26 umfasst einen Sitz 28, ein Lenkrad 30, ein Gaspedal 16, ein Kupplungspedal 76 (s. Figur 2) und ein Pedal für die Bremse (nicht gezeigt) und einige im Griffbereich des sich am Bedienerarbeitsplatz 26 befindlichen Bedieners angeordnete Eingabeelemente zur Vorgabe auswählbarer Funktionen des Arbeitsfahrzeugs 10. Zu letzteren zählen eine Strategieeingabeeinrichtung 32 zur Auswahl einer Schaltstrategie des Getriebes für den Fahrantriebsstrang, ein Reversierschalter 54, Getriebeschalteingabeelemente 78 und 80 und ein Handgashebel 34. Die Strategieeingabeeinrichtung 32, die Getriebeschalteingabeelemente 78 und 80 und der Reversierschalter 54 könnten auch als Menüpunkt auf einem virtuellen Terminal eines nach ISO 11783 arbeitenden Bussystems realisiert werden. Das Gaspedal 16 und der Handgashebel 34 werden im Folgenden gemeinsam als Drehzahlvorgabeeinrichtung bezeichnet. Anstelle dieser Elemente oder zusätzlich dazu könnte auch ein Fahrhebel als Drehzahlvorgabeeinrichtung verwendet werden.

Die Figur 2 zeigt schematisch die Antriebsanordnung des Arbeitsfahrzeugs 10 zum Antrieb der Hinterräder 22. Ein Antriebsmotor 36 in Form eines Verbrennungsmotors, in der Regel ein Dieselmotor, treibt eine Welle 38 an, die zum Antrieb der Hinterräder 22 und vorzugsweise auch der Vorderräder 20 und ggf. anderer antreibbarer Einrichtungen des Arbeitsfahrzeugs 10, wie eines Kompressors einer Klimaanlage und eines Stromgenerators dient.

Der in der Figur 2 schematisch dargestellte Antriebsstrang umfasst ein von der Welle 38 angetriebenes Lastschaltgetriebe 40, eine Reversiereinheit 42, eine Kupplung 44, ein Synchronschaltgetriebe 46 und ein Differenzial 48, das zum Antrieb der Hinterräder 22 dient. Sind auch die Vorderräder 20 antreibbar, sind weitere Differenzialgetriebe vorzusehen.

Bei dem Lastschaltgetriebe 40 handelt es sich um ein Teillastschaltgetriebe zur Schaltung der Gänge unter Last. Zur Schaltung der Gänge gibt eine Steuereinheit 50 entsprechende elektrische Signale an einen ersten Aktor 52 ab, der das Lastschaltgetriebe 40 mit elektrischen oder hydraulischen Signalen ansteuert. Das Synchronschaltgetriebe 46 ist als Gruppenschaltgetriebe ausgebildet. Die Reversiereinheit 42 dient der Umschaltung zwischen Vorwärtsfahrt und Rückwärtsfahrt und lässt sich durch einen mit der Steuereinheit 50 verbundenen Aktor 56 umschalten, der durch den Reversierschalter 54 gesteuert wird. Die Steuereinheit 50 ist weiterhin mit einem Kupplungsaktor 58 verbunden, der zum Bewegen der Kupplung zwischen einer Trennposition, in der der Antriebsstrang unterbrochen ist, und einer Verbindungsposition dient, in der der Antriebsstrang geschlossen ist. Ein weiterer mit der Steuereinheit 50 verbundener Aktor 60 dient zum elektrisch oder hydraulisch fremdkraftbetätigten Auswählen der jeweiligen Gruppe des Synchronschaltgetriebes 46.

Die elektronische Steuereinheit 50 ist über einen Gerätebus 62 (z. B. CAN-Bus) mit einer Bedienerschnittstellenlogik 64 verbunden, die ihrerseits mit der Strategieeingabeeinrichtung 32, der Drehzahlvorgabeeinrichtung (Gaspedal 16 und Handgashebel 34), dem Kupplungspedal 76, den Getriebeschalteingabeelementen 78 und 80 und dem Reversierschalter 54 verbunden ist. Das Gaspedal 16 und das Kupplungspedal 76 sind jeweils mit Sensoren versehen, die der Bedienerschnittstellenlogik 64 elektrische Signale übermitteln, die Informationen über die jeweilige Stellung der Pedale 16, 76 enthalten. Die Steuereinheit 50 ist weiterhin über den Bus 62 mit einer Motorsteuerung 66 verbunden, die wiederum eine Einspritzanlage 68 des Verbrennungsmotors 36 steuert und der von einem Drehzahlsensor 70 eine Information über die jeweilige Drehzahl der Welle 38 zugeführt wird. Ein mit der Steuereinheit 60 verbundener, zweiter Drehzahlsensor 72 erfasst die jeweilige Drehzahl der Abtriebswelle 74 des Synchronschaltgetriebes 46. Die Drehzahlsensoren 70 und 72 können mit den zugehörigen Wellen 38 bzw. 74 beispielsweise optisch (durch mit der Welle 38, 74 verbundene gelochte Kodierscheiben, die mit Lichtschranken zusammenarbeiten) oder magnetisch (durch mit der Welle 38, 74 verbundene Permanentmagnete, die mit Induktionsspulen, Reedrelais oder Hallsensoren zusammenarbeiten) zusammenwirken oder die Drehzahl auf beliebige andere Weise erfassen. Die Motorsteuerung 66, die die Einspritzanlage 68 und den Drehzahlsensor 70 abfragen kann und die Drehzahlvorgabeeinrichtung (Gaspedal 16 und Handgashebel 34) dienen als Signalquelle zur Bereitstellung von Informationen hinsichtlich des Betriebszustands des Antriebsmotors 36 für die Steuereinheit 50.

Bei stehendem Fahrzeug 10 kann der Bediener durch den Reversierschalter 54 den Antriebsstrang reversieren, um rückwärts fahren zu können. Bei Rückwärtsfahrbetrieb ist die unten beschriebene Automatik abgeschaltet bzw. auf Betätigung des Aktors 52 des Lastschaltgetriebes 40 beschränkt.

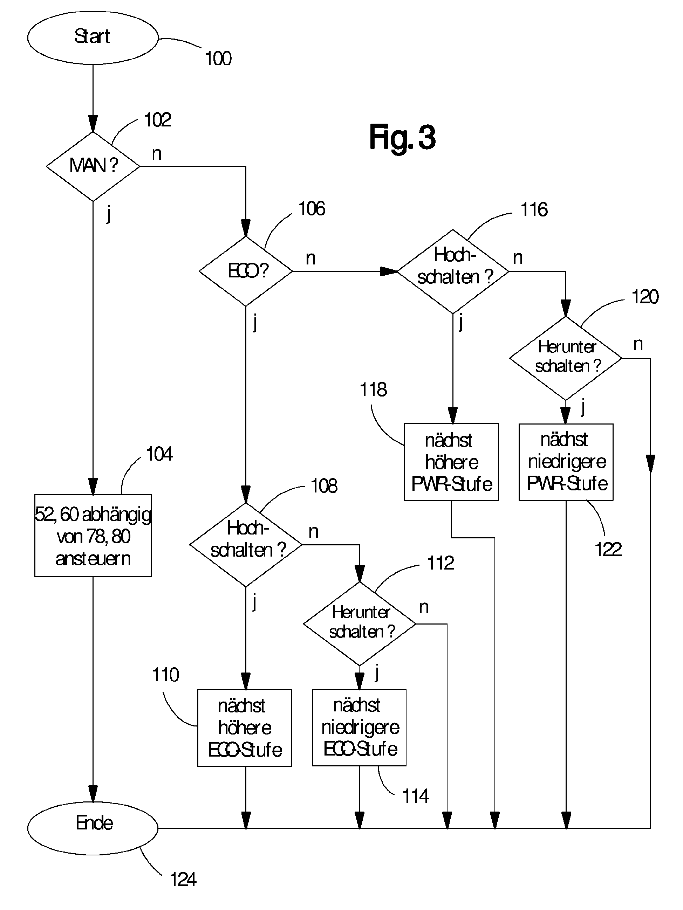

Die Figur 3 zeigt ein Flussdiagramm, das den Betrieb der Steuereinheit 50 der Getriebesteuerung veranschaulicht. Die Strategieeingabeeinrichtung 32 ermöglicht dem Bediener eine Auswahl zwischen wenigstens drei Betriebsarten. Nach dem Start im Schritt 100, der in regelmäßigen Zeitabständen durchgeführt wird, z. B. alle 100 ms, wird im Schritt 102 abgefragt, ob der Bediener mit der Strategieeingabeeinrichtung 32 einen manuelle Betrieb ausgewählt hat. Ist das der Fall, folgt der Schritt 104, in dem der Aktor 52 für das Lastschaltgetriebe 40 und der Aktor 46 für das Synchronschaltgetriebe 46 entsprechend der Eingaben in die Getriebeschalteingabeelemente 78 und 80 kontrolliert werden, so dass der Bediener den Gang des Lastschaltgetriebes 40 mit dem Getriebeschalteingabeelement 78 und die Gruppe des Synchronschaltgetriebes 46 mit dem Getriebeschalteingabeelemente 80 manuell auswählen kann. Dem Schritt 104 folgt im Schritt 124 das Ende der Routine. Im manuellen Betrieb wird die Kupplung 44 über den Kupplungsaktor 58 und die Steuereinheit 50 durch das Kupplungspedal 76 gesteuert und der Bediener gibt durch das Gaspedal 16 oder den Handgashebel 34 eine gewünschte Fahrgeschwindigkeit vor. Die Steuereinheit 50 übermittelt eine Information über die Stellung des Gaspedals 16 oder des Handgashebels 34 an die Motorsteuerung 66, die die Einspritzanlage 68 veranlasst, dem Antriebsmotor 36 der Stellung des Gaspedals 16 oder des Handgashebels 34 zugeordnete Kraftstoffmengen zuzuführen.

Weiterhin erlaubt die Strategieeingabeeinrichtung 32 die Auswahl einer ersten automatischen Schaltstrategie, die als ECO für ökonomische Fahrweise gekennzeichnet ist und die Auswahl einer automatischen zweiten Schaltstrategie, die als PWR für eine Hochleistungsfahrweise gekennzeichnet ist. Falls im Schritt 102 nicht ein manueller Betrieb ausgewählt wurde, folgt der Schritt 106, in dem abgefragt wird, ob die erste Schaltstrategie gewählt wurde. Ist das der Fall, folgt der Schritt 108, in dem untersucht wird, ob ein Hochschalten der Übersetzungsstufe erfolgen soll. Ist das der Fall, wird im Schritt 110 die nächst höhere für die erste Schaltstrategie vorgesehene Übersetzungsstufe ausgewählt. Ist ein Hochschalten nicht sinnvoll, wird im Schritt 112 abgefragt, ob ein Herunterschalten erfolgen soll. Ist das der Fall, wird im Schritt 114 die nächst niedrige für die erste Schaltstrategie vorgesehene Übersetzungsstufe ausgewählt. Falls kein Schaltvorgang erfolgen soll, wird der Vorgang mit dem Schritt 124 beendet.

Ergibt sich im Schritt 106, dass nicht die erste Schaltstrategie ausgewählt wurde, liegt folglich eine Auswahl der zweiten Schaltstrategie vor. In diesem Fall folgt der Schritt 116, in dem untersucht wird, ob ein Hochschalten der Übersetzungsstufe erfolgen soll. Ist das der Fall, wird im Schritt 118 die nächst höhere für die zweite Schaltstrategie vorgesehene Übersetzungsstufe ausgewählt. Ist ein Hochschalten nicht sinnvoll, wird im Schritt 120 abgefragt, ob ein Herunterschalten erfolgen soll. Ist das der Fall, wird im Schritt 122 die nächst niedrige für die erste Schaltstrategie vorgesehene Übersetzungsstufe ausgewählt. Falls kein Schaltvorgang erfolgen soll, wird der Vorgang mit dem Schritt 124 beendet.

Die in den Schritten 110 und 114 für die erste Schaltstrategie verwendeten Gänge des Lastschaltgetriebes 40 und Gruppen des Synchronschaltgetriebes 46 beschränken sich auf eine (erste) Teilmenge der tatsächlich verfügbaren Kombinationen. Es werden bei dieser Schaltstrategie nicht alle Gruppe-Gang-Kombinationen durchgeschaltet, was zu schnelleren Schaltvorgängen führt. Die erste Schaltstrategie eignet sich besonders für Anwendungsfälle, bei denen das Arbeitsfahrzeug 10 gering ausgelastet ist, z. B. beim Fahren auf einer Straße ohne Anhänger oder Arbeitsgerät 12. Die bei der ersten Schaltstrategie verwendeten Kombinationen weisen relativ geringe Überlappungen auf, die dennoch hinreichend groß sind, um mit dem - bei geringer Belastung relativ großen - verfügbaren Drehzahlbereich des Antriebsmotors 36 den gesamten Vortriebsgeschwindigkeitsbereich abzudecken.

Die in den Schritten 118 und 122 bei der zweiten Schaltstrategie verwendeten Gänge des Lastschaltgetriebes 40 und Gruppen des Synchronschaltgetriebes 46 umfassen eine größere Anzahl der tatsächlich verfügbaren Kombinationen, jedoch nicht unbedingt alle davon. Es werden bei dieser Schaltstrategie gegenüber der ersten Schaltstrategie wesentlich mehr Gruppe-Gang-Kombinationen durchgeschaltet, was eine bessere Auslastung des Antriebsmotors 36 gewährleistet. Die zweite Schaltstrategie eignet sich besonders für Anwendungsfälle, bei denen das Arbeitsfahrzeug 10 in hohem Maße ausgelastet ist, z. B. beim Bodenbearbeiten auf einem Feld oder beim Befahren einer steilen Straße mit Anhänger oder Arbeitsgerät 12. Die bei der zweiten Schaltstrategie verwendeten Kombinationen weisen größere Überlappungen auf, um mit dem zur Bereitstellung der erforderlichen Leistung geeigneten Drehzahlbereich des Antriebsmotors 36 - der hier kleiner als bei der ersten Schaltstrategie ist - den gesamten Vortriebsgeschwindigkeitsbereich abzudecken.

Bei beiden Schaltstrategien gibt der Bediener durch das Gaspedal 16 oder den Handgashebel 34 eine gewünschte Fahrgeschwindigkeit vor. Die Steuereinheit 50 übermittelt eine Information über die Stellung des Gaspedals 16 oder des Handgashebels 34 an die Motorsteuerung 66, die die Einspritzanlage 68 veranlasst, dem Antriebsmotor 36 der Stellung des Gaspedals 16 oder des Handgashebels 34 zugeordnete Kraftstoffmengen zuzuführen. Während der durch die Steuereinheit 50 veranlassten Schaltvorgänge des Synchronschaltgetriebes 46 wird auch der Kupplungsaktor 58 durch die Steuereinheit 50 zum Trennen der Kupplung 44 vor dem Schalten und zum Schließen der Kupplung 44 nach dem Schalten veranlasst. Die Kupplung 44 wird auch selbsttätig geöffnet, wenn die mit dem Drehzahlsensor 72 erfasste Geschwindigkeit des Arbeitsfahrzeugs 10 beim Bremsen einen Schwellenwert unterschreitet, um ein Abwürgen des Antriebsmotors 36 zu verhindern.

Es ist anzumerken, dass es auch denkbar wäre, mit der Strategieeingabeeinrichtung 32 Betriebsarten auswählbar zu machen, bei denen nur das Lastschaltgetriebe 40 selbsttätig geschaltet wird. Auch hier kann eine Schaltstrategie zum Schalten bei kleinen Drehzahlen, entsprechend einer geringen Belastung, oder eine Schaltstrategie zum Schalten bei hohen Drehzahlen, entsprechend einer größeren Belastung, ausgewählt werden. Außerdem ist es denkbar, eine Betriebsart auswählbar zu machen, bei der das Synchronschaltgetriebe 46 manuell gesteuert wird und das Lastschaltgetriebe 40 nach einem manuell gesteuerten Schaltvorgang des Synchronschaltgetriebes 46 selbsttätig auf ein Übersetzungsverhältnis gebracht wird, bei dem der Drehzahlunterschied am Ein- und Ausgang der Kupplung 44 möglichst gering ist, um ein weiches Einkuppeln zu ermöglichen. Zu diesem Zweck kann auch die Drehzahl des Antriebsmotors 36 über die Motorsteuerung 66 geändert werden. Falls eine oder mehrere der unteren Übersetzungsstufen des Synchronschaltgetriebes 46 manuell ausgewählt wurden, kann die beschriebene Automatik selbsttätig ausgeschaltet oder auf Schaltvorgänge des Lastschaltgetriebes 40 beschränkt werden. Es kann auch möglich sein, die Getriebeschalteingabeelemente 78 und 80 bei aktivierter erster oder zweiter Schaltstrategie zu betätigen. Dann befolgt die Steuereinheit 50 den Bedienerwunsch und verstellt die Aktoren 52 oder 60, kehrt dann aber wieder zur automatischen Steuerung zurück.

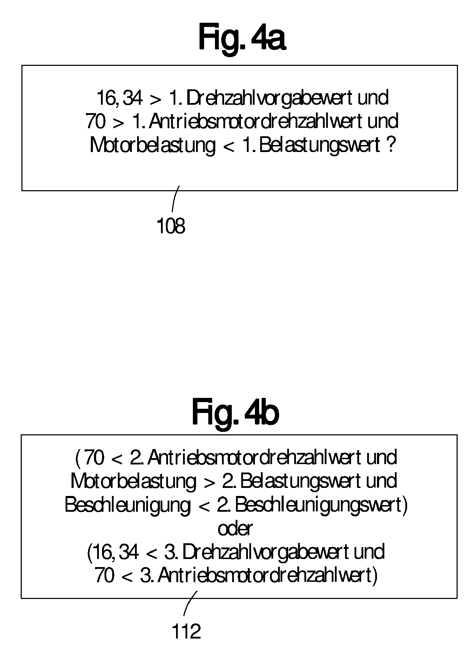

In der Figur 4a wird der Schritt 108 näher beschrieben. Ein Hochschalten erfolgt, wenn die Drehzahlvorgabeeinrichtung (Gaspedal 16 oder Handgashebel 34) oberhalb eines vorbestimmten, ersten Drehzahlvorgabewerts steht und gleichzeitig die mit dem Drehzahlsensor 70 gemessene Drehzahl des Antriebsmotors 36 höher als ein vorbestimmter, erster Antriebsmotordrehzahlwert ist und gleichzeitig die Belastung des Antriebsmotors 36 kleiner als ein erster vorbestimmter Belastungswert ist. Die Belastung des Antriebsmotors 36 wird anhand des aktuellen Betriebsstoffflusses in der Einspritzanlage 68, die über die Motorsteuerung 66 abgefragt wird, unter Berücksichtigung der geltenden Beschleunigung des Antriebsmotors 36, die mit dem Drehzahlsensor 70 erfasst wird, bestimmt. Dadurch wird verhindert, dass bei einem unbelastet laufenden Antriebsmotor 36, der hohe Betriebsstoffmengen aufnimmt, eine scheinbare hohe Belastung ermittelt wird. Ein Hochschalten erfolgt demnach nur, wenn der Bediener hinreichend viel Gas gibt, die Drehzahl des Antriebsmotors 36 höher als der erste Drehzahlwert liegt und der Antriebsmotor 36 nicht zu stark belastet wird.

In der Figur 4b wird der Schritt 112 näher dargestellt. Ein Herunterschalten erfolgt, wenn eine von zwei Kombinationen von Bedingungen vorliegt. Die erste Kombination liegt vor, wenn der Antriebsmotor 36 unter einer relativ hohen Belastung arbeitet. Dann ist seine Drehzahl unterhalb eines zweiten Drehzahlwertes und seine Beschleunigung liegt unterhalb eines zweiten Beschleunigungswerts und gleichzeitig ist die Antriebsmotorbelastung, die wie im Schritt 108 ermittelt wird, größer als ein zweiter, vorgegebener Belastungswert. Die zweite Kombination liegt vor, wenn der Bediener verzögern möchte und das Gas wegnimmt. Dann steht die Drehzahlvorgabeeinrichtung (Gaspedal 16 oder Handgashebel 34) unterhalb eines vorbestimmten, dritten Drehzahlvorgabewerts und die Drehzahl des Antriebsmotors 36 liegt unterhalb eines vorbestimmten, dritten Antriebsmotordrehzahlwertes. Falls eine der erläuterten Kombinationen von Bedingungen vorliegt, erfolgt ein Herunterschalten der Übersetzungsstufe.

Bei der ersten Schaltstrategie (Fig. 4a und 4b) können der erste und zweite Antriebsmotordrehzahlwert identisch sein und z. B. bei 1600/min liegen. Der dritte Antriebsmotordrehzahlwert liegt darunter, z. B. bei 1300/min. Der zweite Drehzahlvorgabewert ist kleiner als der erste Drehzahlvorgabewert und der erste Motorbelastungswert ist kleiner als der zweite Motorbelastungswert.

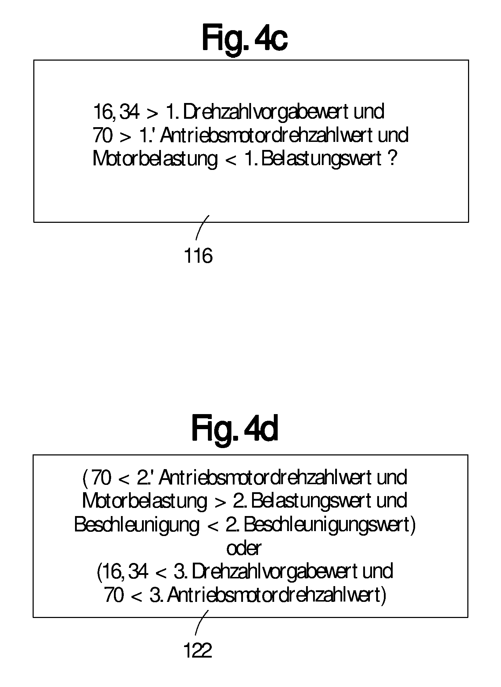

In den Figuren 4c und 4d sind die Schritte 116 und 122 veranschaulicht. Dort werden dieselben Abfragen wie in den Schritten 108 und 112 durchgeführt, mit dem einzigen Unterschied, dass andere Werte für den ersten und zweiten Antriebsmotordrehzahlwert zur Anwendung kommen; die entsprechenden Ordnungszahlen sind jeweils durch einen Apostroph gekennzeichnet. Die übrigen Parameter sind mit denen in der ersten Schaltstrategie identisch. Im Schritt 4c liegt der erste Antriebsmotordrehzahlwert beispielsweise bei 2000/min, während der zweite Antriebsmotordrehzahlwert im Schritt 4d beispielsweise bei 1700/min liegen kann. Es wird demnach bei der zweiten Schaltstrategie erst bei höheren Drehzahlen hochgeschaltet (Schritt 116) als bei der ersten Schaltstrategie und analog auch schon bei höheren Drehzahlen heruntergeschaltet (Schritt 122).

Der Bediener kann auch in den Automatikbetriebsarten durch das Kupplungspedal 76 selbst auskuppeln. Bei getrennter Kupplung 44 erfolgt ein automatisches Schalten der Gruppen und Gänge unabhängig von dem in der Figur 3 gezeigten Vorgehen. Dabei wird mit dem Drehzahlsensor 72 die Rollgeschwindigkeit des Arbeitsfahrzeugs 10 erfasst und bei einer Änderung der Rollgeschwindigkeit fortlaufend die jeweils dazu passende Übersetzung des Lastschaltgetriebes 40 und des Synchronschaltgetriebes 46 ausgewählt, so dass der Drehzahlunterschied zwischen der Drehzahl am Eingang und am Ausgang der Kupplung 44 möglichst gering ist. Zu diesem Zweck kann auch die Drehzahl des Antriebsmotors 36 über die Motorsteuerung 66 geändert werden. In dieser Betriebsart stehen im Gegensatz zu den oben beschriebenen Schaltstrategien alle Gruppe-Gang-Kombinationen zur Verfügung. Nach dem Wiedereinkuppeln wird die beschriebene Automatik wieder aktiviert.

## Patentansprüche

1. Getriebesteuerung für ein Getriebe eines Antriebsstrangs eines Arbeitsfahrzeugs (10), wobei der Antriebsstrang einen Antriebsmotor (36) und ein Getriebe (40, 46) enthält, dessen Übersetzungsstufe durch einen Aktor (52, 60) auswählbar ist und die Getriebesteuerung mit einer elektronischen Steuereinheit (50) ausgestattet ist, die mit einer Signalquelle zur Bereitstellung von Informationen hinsichtlich des Betriebszustands des Antriebsmotors (36) und mit einer Strategieeingabeeinrichtung (32) zur Auswahl zwischen mindestens einer ersten Schaltstrategie, die einer energiesparenden Fahrweise entspricht, und einer zweiten Schaltstrategie, die einem Hochlastbetrieb entspricht, signalübertragend verbunden und zur Ansteuerung des Aktors (52, 60) basierend auf den erhaltenen Signalen eingerichtet ist, **dadurch gekennzeichnet, dass** die Steuereinheit (50) betreibbar ist, bei einer ausgewählten ersten Schaltstrategie mit dem Aktor (52, 60) nur eine vorbestimmte erste Teilmenge der möglichen Übersetzungsstufen des Getriebes (40, 46) auszuwählen, und dass die Steuereinheit (50) betreibbar ist, bei einer ausgewählten zweiten Schaltstrategie mit dem Aktor (52, 60) eine vorbestimmte zweite Menge der möglichen Übersetzungsstufen des Getriebes (40, 46) auszuwählen, die größer als die erste Teilmenge ist.

2. Getriebesteuerung nach Anspruch 1, **dadurch gekennzeichnet, dass** eine Signalquelle zur Bereitstellung von Informationen hinsichtlich des Betriebszustands des Antriebsmotors (36) der Steuereinheit (50) eine Information über die Belastung des Antriebsmotors (36) bereitstellt und/oder mit einer Drehzahlvorgabeeinrichtung (16, 34) zur Vorgabe der Drehzahl des Antriebsmotors (36) und/oder einem Sensor (70) zur Erfassung der Drehzahl des Antriebsmotors (36) verbunden ist.

3. Getriebesteuerung nach Anspruch 1 oder 2, **dadurch gekennzeichnet, dass** die Steuereinheit (50) betreibbar ist, bei den beiden Schaltstrategien unterschiedliche Schaltbedingungen anzuwenden.

4. Getriebesteuerung nach einem der Ansprüche 1 bis 3, **dadurch gekennzeichnet, dass** das Getriebe ein Lastschaltgetriebe (40) und ein Synchronschaltgetriebe (46) umfasst, die jeweils mit einem Aktor (52, 60) zur Auswahl der Übersetzungsstufe ausgestattet sind.

5. Getriebesteuerung nach Anspruch 3 oder 4, **dadurch gekennzeichnet, dass** die Steuereinheit (50) betreibbar ist, bei ausgewählter erster Schaltstrategie nur eine Teilmenge der möglichen Kombinationen von Stellungen der Aktoren (52, 60) des Lastschaltgetriebes (40) und des Synchronschaltgetriebes (46) auszuwählen, während die Steuereinheit (50) betreibbar ist, bei ausgewählter zweiter Schaltstrategie eine größere Teilmenge der möglichen Kombinationen von Stellungen der Aktoren (52, 60) des Lastschaltgetriebes (40) und des Synchronschaltgetriebes (46) auszuwählen.

6. Getriebesteuerung nach einem der Ansprüche 2 bis 5, **dadurch gekennzeichnet, dass** die Steuereinheit (50) betreibbar ist, das Getriebe (40, 46) in eine größere Übersetzungsstufe zu schalten, wenn die Drehzahlvorgabeeinrichtung (16, 34) oberhalb eines vorbestimmten, ersten Drehzahlvorgabewerts steht und gleichzeitig die Drehzahl des Antriebsmotors (36) oberhalb eines vorbestimmten, ersten Antriebsmotordrehzahlwerts liegt und gleichzeitig die Belastung des Antriebsmotors (36) unterhalb eines vorbestimmten ersten Belastungswerts liegt, wobei der Betrag des ersten Antriebsmotordrehzahlwerts von der ausgewählten Schaltstrategie abhängt.

7. Getriebesteuerung nach einem der Ansprüche 2 bis 6, **dadurch gekennzeichnet, dass** die Steuereinheit (50) betreibbar ist, das Getriebe (40, 46) in eine kleinere Übersetzungsstufe zu schalten, wenn die Drehzahl des Antriebsmotors (36) unterhalb eines vorbestimmten zweiten Antriebsmotordrehzahlwerts liegt und gleichzeitig die Belastung des Antriebsmotors (36) oberhalb eines vorbestimmten zweiten Belastungswerts liegt und gleichzeitig die Beschleunigung des Antriebsmotors (36) unterhalb eines vorbestimmten zweiten Beschleunigungswerts liegt, wobei der Betrag des zweiten Antriebsmotordrehzahlwerts von der ausgewählten Schaltstrategie abhängt.

8. Getriebesteuerung nach einem der Ansprüche 2 bis 7, **dadurch gekennzeichnet, dass** die Steuereinheit (50) betreibbar ist, das Getriebe (40, 46) in eine kleinere Übersetzungsstufe zu schalten, wenn die Drehzahlvorgabeeinrichtung (16, 34) unterhalb eines vorbestimmten, dritten Drehzahlvorgabewerts steht und gleichzeitig die Drehzahl des Antriebsmotors (36) unterhalb eines vorbestimmten dritten Antriebsmotordrehzahlwerts liegt.

9. Getriebesteuerung nach einem der Ansprüche 4 bis 8, **dadurch gekennzeichnet, dass** sich zwischen dem Lastschaltgetriebe (40) und dem Synchronschaltgetriebe (46) eine Kupplung (44) befindet, die durch einen Bediener betätigbar ist, und dass die Steuereinheit (50) betreibbar ist, bei durch den Bediener geöffneter Kupplung die Aktoren (52, 60) des Lastschaltgetriebes (40) und des Synchronschaltgetriebes (46) derart zu verstellen, dass sich ein möglichst geringer Drehzahlunterschied am Eingang und Ausgang der Kupplung (44) ergibt.

10. Verfahren zum Betrieb einer Getriebesteuerung für ein Getriebe eines Antriebsstrangs eines Arbeitsfahrzeugs (10), wobei der Antriebsstrang einen Antriebsmotor (36) und ein Getriebe (40, 46) enthält, dessen Übersetzungsstufe durch einen Aktor (52, 60) auswählbar ist und die Getriebesteuerung mit einer elektronischen Steuereinheit (50) ausgestattet ist, die mit einer Signalquelle zur Bereitstellung von Informationen hinsichtlich des Betriebszustands des Antriebsmotors (36) und mit einer Strategieeingabeeinrichtung (32) zur Auswahl zwischen mindestens einer ersten Schaltstrategie, die einer energiesparenden Fahrweise entspricht, und einer zweiten Schaltstrategie, die einem Hochlastbetrieb entspricht, signalübertragend verbunden und zur Ansteuerung des Aktors (52, 60) basierend auf den erhaltenen Signalen eingerichtet ist, **dadurch gekennzeichnet, dass** die Steuereinheit (50) bei einer ausgewählten ersten Schaltstrategie mit dem Aktor (52, 60) nur eine vorbestimmte erste Teilmenge der möglichen Übersetzungsstufen des Getriebes (40, 46) auswählt, und dass die Steuereinheit bei einer ausgewählten zweiten Schaltstrategie mit dem Aktor (52, 60) eine vorbestimmte zweite Menge der möglichen Übersetzungsstufen des Getriebes (40, 46) auswählt, die größer als die erste Teilmenge ist.
